# EUROPEAN PATENT SPECIFICATION

(11) **EP 2 075 082 B1**
(45) Date of publication and mention of the grant of the patent: **11.11.2015**
(21) Application number: 07807744.3
(22) Date of filing: 21.09.2007
(51) Int. Cl.: B23K 26/20, B23K 26/04, B29C 65/16, C03B 23/203, C03C 27/02

(54) **Substance joining method**
Materialverbindungsverfahren
Procédé d'assemblage de substances

(30) Priority: 22.09.2006 JP 2006257606
(43) Date of publication of application: 01.07.2009
(73) Proprietor: NEC SCHOTT Components Corporation, Koka-shi Shiga 528-0034 (JP)
(72) Inventor: ITOH, Kazuyoshi, Osaka 565-0871 (JP); TAMAKI, Takayuki, Osaka 565-0871 (JP)
(74) Representative: Diehl & Partner GbR
(86) International application number: PCT/JP2007/068413
(87) International publication number: WO 2008/035770

(56) References cited:
- EP-A1- 1 405 713
- EP-A2- 0 492 994
- WO-A1-89/05209
- WO-A2-2005/107996
- JP-A- 2005 066 629

## Description

### Technical Field

The present invention relates to a joining method for joining two substances with use of an ultrashort pulse laser beam as disclosed in the preamble of claim 1.

### Background Art

There is a known method (Patent Document 1) as disclosed in the preamble of claim 1, for joining two substances composed of a transparent material with use of an ultrashort pulse laser on the order of a femto (1x10⁻¹⁵) second to a pico (1x10⁻¹²) second (hereinafter, also called a femtosecond laser).

In this method substances that are transparent to an ultrashort pulse laser beam, such as silica glass, are stacked together and held by clamping. An ultrashort pulse laser beam that has been adjusted so as to be focused on an abutting portion of the substances is irradiated on the substances, and the laser beam causes a multiphoton absorption phenomenon to occur, thus melting at least one of the stacked substances that are to be joined, thereby joining the two substances.

In this way, using the multiphoton absorption phenomenon caused by the laser beam eliminates the need to dispose a light absorbing material between substances to be joined, which was necessary in a case of joining transparent substances together with the use of a laser in conventional technology. This facilitates the joining operation and also achieves effects such as the lack of problems such as a reduction in transparency due to the light absorbing material. Patent Document 1: JP 2005-66629A

### Disclosure of Invention

### Problem to be Solved by the Invention

However, a problem in the above-described conventional method is that it is necessary accurately to form the focal point of the ultrashort pulse laser beam on the abutting portion of the two substances that are to be joined, but knowing the position where the focal point of the laser beam is formed is extremely difficult since the substances to be joined are transparent to the laser beam.

For this reason, in the exemplary case of joining two plates of glass in the above-described conventional method, it was necessary to damage one face of the glass in advance by laser abrasion in order to enable optically detecting the joining face, or irradiate a halogen lamp from the side of the joining face and check the focusing status of the laser beam and the joining status while performing the joining operation. Also, due to the constraint in which it is necessary for the focal point of the laser beam to be formed accurately on the abutting portion of the two substances to be joined, there were issues in which it was necessary to keep the incidence direction of the laser beam perpendicular to the joining face.

In view of this, an object of the present invention is to solve the above-described conventional issues, and to obtain a substance joining method and substance joining device therefor that are suited for practical use and significantly reduce the difficulty of accurately forming the focal formation position of an ultrashort pulse laser in a case of joining substances with use of a multiphoton absorption phenomenon, a joined body manufactured with use of the joining method, as well as a manufacturing method for the joined body.

### Means for Solving Problem

In order to solve the above issues, a first substance joining method of the present invention is a method for joining two substances by causing a nonlinear absorption phenomenon to occur with use of an ultrashort pulse laser beam, wherein among the two substances, a first substance that is positioned on a side on which the ultrashort pulse laser beam is incident is composed of a transparent material, and the two substances are joined by generating, at a joining face of the two substances, a filament area that is generated by a self-focusing effect of the ultrashort pulse laser beam in the first substance.

Note that transparency in the definition that the first substance is composed of a transparent material means that when an ultrashort pulse laser beam incidents on a substance to be joined, the substance is transparent to the extent that a nonlinear absorption phenomenon occurs. Accordingly whether the substance to be joined is transparent with respect to visible light is not a problem. In other words, whether a member generally is recognized as having a high degree of transparency is not a problem in the present invention. Even if a member generally is determined to not have a high degree of transparency, such a substance is considered to be a substance composed of a transparent material in the definition of the present invention as long as an ultrashort pulse laser beam can cause the nonlinear absorption phenomenon to occur in the substance. When "transparent" appears in the present description, the above definition is to be applied.

According to the first substance joining method of the present invention, two substances can be joined in a filament area that is generated along a predetermined length, and therefore there is no longer a need to accurately align the focal point position of the ultrashort pulse laser beam on the abutting portion of the two substances to be joined, thereby providing a joining method suited for practical use.

According to this method, the ultrashort pulse laser beam is reflected off the abutting portion of the two substances, and therefore the focal point position of the ultrashort pulse laser beam can be detected easily and accurately, thereby eliminating the need to perform a distinctly difficult operation in order to align the focal point position of the pulse laser on the abutting portion. This enables providing a joining method suited for practical use.

This method enables easily manufacturing a joined body in which a transparent member and another member have been joined.

### Effects of the Invention

The substance joining method for the same of the present invention enable joining two substances in a state that is suited for practical use by significantly reducing the difficulty of forming the focal point of an ultrashort pulse laser beam at an accurate position when joining two substances with use of a nonlinear absorption phenomenon, and enable easily obtaining a joined body composed of two substances.

### Brief Description of Drawings

[FIG. 1] FIG. 1 is an illustration showing a generation state of a filament area.
[FIG. 2] FIG. 2 shows generation conditions and generation states of a filament area.
[FIG. 3] FIG. 3 is an illustration showing a process for joining two substances.
[FIG. 4] FIG. 4 is a perspective view showing a schematic of a jig that fixes substances to be joined.
[FIG. 5] FIG. 5 is an illustration of a joint strength tester.
[FIG. 6] FIG. 6 is an illustration showing states of tilting a beam and performing checking.
[FIG. 7] FIG. 7 is a schematic diagram showing a structure of a substance joining device.

### Description of the Reference Signs

- 1: first substance
- 2: second substance
- 3: focusing lens
- 4: ultrashort pulse laser beam
- 5: focal point
- 6: filament area
- 7: joining area
- 8: joining portion
- 9: laser beam
- 10: compressive force
- 11: laser beam scan direction
- 12: modified (altered) area
- 13: upper side plate
- 14: lower side fixed plate
- 15: projection
- 16: fixing screw
- 17: base
- 18: brace
- 19: pulley block
- 20: wire
- 21: plate
- 22: weight
- 23: tilt direction
- 24: laser irradiating device
- 25: ND filter
- 26: shutter
- 27: concave lens
- 28: convex lens
- 29: aperture
- 30: mirror
- 31: camera
- 32: control device
- 33: XY stage

### Description of the Invention

A first substance joining method of the present invention is a method for joining two substances by causing a nonlinear absorption phenomenon to occur with use of an ultrashort pulse laser beam, wherein among the two substances, a first substance that is positioned on a side on which the ultrashort pulse laser beam incidents is composed of a transparent material, and the two substances are joined by generating, at a joining face of the two substances, a filament area that is generated by a self-focusing effect of the ultrashort pulse laser beam in the first substance.

In the first substance joining method of the present invention, since two substances can be joined in a filament area that is generated along a predetermined length, there is no longer a need to accurately-align the focal point position of the ultrashort pulse laser beam on the abutting portion of the two substances that are to be joined- The first substance joining method of the present invention is therefore suited for practical use.

In the substance joining method of the present invention, preferably the first substance is a glass or a transparent resin. Using such substances as the substance composed of a transparent material enables favorably generating a filament area by a self-focusing effect of the laser beam.

Note that among the two substances, a second substance that is positioned on a side different from the side on which the ultrashort pulse laser beam incidents may be composed of the same type of transparent material as the first substance.

Also, among the two substances, a second substance that is positioned on a side different from the side on which the ultrashort pulse laser beam is incident may be a different type of substance from the first substance. In this case, preferably the second substance is any of a glass, a metal, silicon, a compound of a metal or silicon, a semiconductor or a semiconductor compound, and a resin, and furthermore, preferably the metal is any of stainless steel, iron, steel, aluminum, copper, and an alloy including at least one of these.

According to this structure, by taking advantage of the practicality of the first substance joining method of the present invention, it is possible also easily to join substances that were conventionally difficult to join.

Note that in the substance joining method of the present invention, preferably the ultrashort pulse laser beam incidents in a condition of being tilted at a predetermined angle with respect to the joining face of the two substances, and the ultrashort pulse laser beam incidents in a condition of being tilted at a predetermined angle with respect to the joining face of the two substances, or a tilt direction of the ultrashort pulse laser beam is a direction that is substantially orthogonal to a scan direction of the ultrashort pulse laser beam. This method enables widening the margin of the laser beam path and being compatible with various situations in a case of joining two substances, and also enables preventing adverse effects that occur in a case of causing the ultrashort laser beam to be incident perpendicularly on the joining face of the two substances.

Also, in the substance joining method of the present invention, preferably the two substances are joined by a plurality of island-like joining portions that have been formed with a predetermined interval therebetween, or preferably the two substances are joined by a plurality of linear joining portions having a predetermined length, which have been formed with a predetermined interval therebetween. This method enables joining two substances whose thermal expansion coefficients are substantially different, such as glass and metal.

Furthermore, a substance joining device includes: an irradiation means for irradiating an ultrashort pulse laser bream; a hold means for holding, in a clamped state, two substances that are substances to be joined, so that among the two substances, a first substance composed of a transparent material is on a side on which the ultrashort pulse laser beam is incident, and a second substance is on a side that is opposite thereto and a move means that has the hold means mounted thereon and is for changing a relative position of the two substances with respect to the ultrashort pulse laser beam, wherein the irradiation means irradiates the ultrashort pulse laser beam under an irradiating condition such that a filament area is generated in a portion including a joining face of the two substances.

The substance joining device enable easily irradiating the ultrashort pulse laser beam toward the joining face of the two substances, and scanning the ultrashort pulse laser beam for joining the two substances.

Furthermore, a joined body has been manufactured by joining two substances with use of the substance joining method of the present invention.

In the joined body and manufacturing method it is preferable that the two substances are optical elements composed of a transparent material and a semiconductor substrate in which a semiconductor area has been formed, or that both of the two substances are transparent optical elements. This enables easily manufacturing a semiconductor element on which an optical element has been mounted, and a complex optical element in which a plurality of optical elements have been joined.

Below is a description of embodiments of the present invention with reference to the drawings.

### Embodiment 1

The following describes a substance joining method of the present invention as Embodiment 1. Before describing a specific embodiment, the following is a description of a filament area and the principle of its generation, which are the most important points in the joining method according to the present embodiment.

When an ultrashort pulse laser beam having a pulse width on the order of a femtosecond to a picosecond is incident on a transparent substance such as glass, the laser beam has a basically Gaussian spatial intensity distribution, and therefore the refractive index in a center portion where the light intensity is high in a nonlinear medium is higher than in other areas, and the medium itself acts as a positive lens. For this reason, a self focusing effect occurs in which the incident light becomes focused to a point, and in an ultrashort pulse laser beam, the beam diameter is thought to become minimal after the ultrashort pulse laser beam has propagated a finite distance in the transparent substance.

However, in actuality; photoionization occurs in the medium, plasma in which electrons and ions in the substance move freely is formed, and the refractive index of the medium decreases. When the tertiary nonlinear optical effect and the reduction in the refractive index due to plasma formation counterbalance each other, the ultrashort pulse laser beam propagates a predetermined distance while maintaining a certain beam diameter. This phenomenon is called filamentation, and the area where filamentation occurs is called a filament area. Destructive damage is thought to not readily occur in the filament area due to the plasma density being kept constant

Upon confirmation, the inventors learned that if the peak power of the pulse laser beam is high, a filament area is formed when the pulse width is up to approximately 100 nano (1×10⁻⁹) seconds. Given that the substance joining method of the present invention described in the present embodiment generates a filament area and joins two substances with use of the filament area, the generation of the filament area is a generation condition of the ultrashort pulse laser beam in a case of joining. In other words, the "ultrashort pulse laser beam" defined in the substance joining method according to the present embodiment has a pulse width of up to approximately 100 nanoseconds.

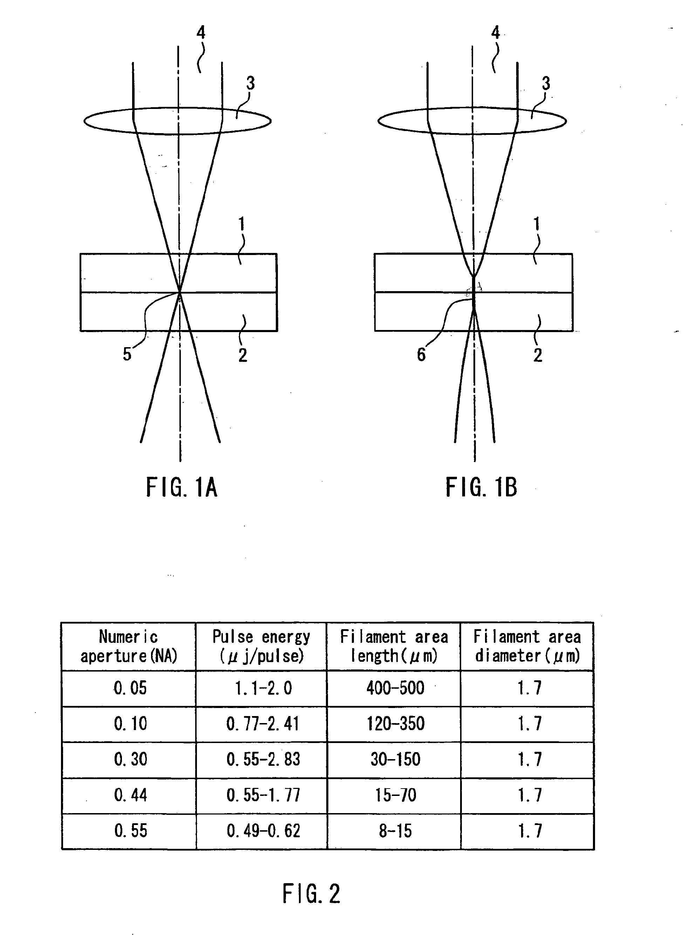

FIG. 1 is an illustration that diagrammatically shows the generation of such a filament area. FIG. 1(a) shows a state of a laser beam in a conventional joining method, in which a filament area is not generated. An ultrashort pulse laser beam 4 is focused by a focusing lens 3 so that a focal point 5, which is a minimal value portion of the beam diameter, is formed in a vicinity of a joining face of a first substance 1 and a second substance 2. The first substance 1 is composed of a transparent material and is on the side on which the laser beam incidents, and the second substance 2 is on the opposite side.

In contrast, in FIG. 1(b) that shows a state in which filamentation is occurring, the ultrashort pulse laser beam 4 passes through the focusing lens 3, and thereafter a minimum diameter portion is formed by the self-focusing effect that occurs in the first substance 1 composed of a transparent material, and a filament area 6 in which the minimum diameter state is maintained for a certain distance is generated due to counterbalance with the plasma phenomenon. The ultrashort pulse laser beam 4 enters the second substance 2 in this state, and thereafter the beam diameter increases due to a reduction in the energy of the laser beam and a weakening of the self-focusing effect, and the filament area 6 disappears.

With use of silica glass, the inventors actually generated a filament area using an ultrashort pulse laser beam. FIG. 2 shows a list of conditions under which a single filament area was formed and the size of the filament area that was formed. Note that the length of a filament area in FIG. 2 indicates a distance (depth) in the laser beam optical axis direction in a portion of the silica glass where that was determined to be an area in which the refractive index of the silica glass changed after irradiation of the ultrashort pulse laser beam, due to a filament area being generated and the glass melting in that portion. Also, the diameter of a filament area indicates the diameter of a plane perpendicular to the laser beam optical axis in the area in which the refractive index changed.

As shown in FIG. 2, a filament area is generated when the numeric aperture (NA) is in the wide range of 0.05 to 0.55.

For each numeric aperture (NA), the generation of a filament area was not observed when the pulse energy was lower than the range shown in FIG. 2. Conversely when a pulse energy higher than the ranges shown in FIG. 2 was applied, a multiyfilament phenomenon occurred in which a plurality of filament areas were generated in parallel, and a void area in which the silica glass turned blackish was generated.

Since the silica glass is thought to melt in the void area as well, it is possible to join two substances with use of the void area as long as the void area can be generated at the abutting face of the two substances. However, sufficiently controlling the area that becomes the void area due to the multi-filament phenomenon is a certain degree more difficult than a case of generating a single filament. Also, the reduction in the transmittance of the silica glass in the portion where a single filament area is formed is 10%, whereas the reduction in the transmittance in the void area is higher at 50% or more.

For this reason, joining substances by irradiating the ultrashort pulse beam under conditions such that the multi-filament phenomenon occurs desirably is limited to cases in which, considering the joined body formed by two substances that have been joined, there is not much demand for optical properties such as transparency for the overall joined body, such as a case in which one of the two substances to be joined is opaque.

On the other hand, adjusting the pulse energy so that the multi-filament phenomenon does not occur is desirable in cases such as drawing a waveguide with use of an ultrashort pulse laser beam and manufacturing an optical element that is transparent as a whole by joining together optical elements that are composed of a transparent glass material.

Note that it was observed that the multi-filament phenomenon readily occurs even if the numeric aperture (NA) was set high. It also was learned that the smaller the numeric aperture, the longer the filament area that was formed. This means that a relatively inexpensive lens for focusing the laser beam can be used, and in light of this point as well, the joining method of the present invention is practical.

Although the lengths of the single filament areas that were observed were as short as approximately 10 µm and as long as several hundred µm, the diameter of the filament areas was stable at approximately 1.7 µm under all conditions. This is thought clearly to support the principle that a filament area is formed when there is a counterbalance between the above-described self-focusing effect of the laser beam and the beam divergence effect that occurs due to the generation of plasma. In this way, since a certain beam diameter is maintained over a predetermined distance in the filament area, when considering the joining of substances with use of an ultrashort pulse laser beam, it is distinctly easier to perform control than a case of accurately forming the focal point of a laser beam on an abutting portion of two substances as in conventional technology.

Note that in the present invention, the generation of a filament area is defined as a condition in which a minimal beam diameter of an ultrashort pulse laser beam is maintained along a predetermined length as described above. In contrast, in a case of forming a normal focal point in the conventional joining method, the depth of the focal point even at its maximum does not reach 2 to 3 µm in the laser beam optical axis direction, and therefore whether a filament area has been generated can be easily determined by checking how long the minimum beam diameter condition is maintained in the beam optical axis direction.

Also, whether the filament area has been generated can be checked by viewing the glass after the beam irradiation. If a filament area has been generated, there is a rise in the refractive index of the glass in a portion corresponding to the depth of the filament area that was generated, and this portion appears white (bright) under an optical microscope. There is a change that is smooth but drastic to a certain degree at the boundaries at the upper and lower edges of the white area, and the boundaries are connected to the upper and lower transparent areas where the original condition of the glass remains. In other words, a layer-like altered portion remains along the depth along which the filament area was generated. In contrast, in a case of forming a focal point on the abutting face of two substances as in the conventional joining method, there is no formation of a layer-like white area like a case in which a filament area is formed, but rather only the joining face portion turns white.

In this way the whitening of the glass as observed under the optical microscope is thought to be due to the following. The ultrashort pulse laser beam in the filament area causes the occurrence of a light absorbing phenomenon that is induced by multiphoton absorption and field ionization in a substance in which absorption does not occur due to originally being transparent The portion in which the light absorbing phenomenon occurs melts, then rapidly cools and re-solidifies as the beam disappears. Using this phenomenon enables joining two substances with use of an ultrashort pulse laser beam. This method enables joining two substances without damaging the surface of the members to be joined, where a filament area is not formed, and also enables joining in which thermal strain has been eliminated as much as possible since the pulse width of the ultrashort pulse laser beam is smaller than the time required for thermal diffusion in general materials that are to be joined.

Furthermore, since a filament area is generated in the optical axis direction of the ultrashort pulse laser beam, as long as the interval between two substances to be joined at the joining face of the two substances is smaller than the length of the filament area, there is no need to move the focal point by moving the sample or the optical system such as the focusing lens in the optical axis direction. In glass such as phosphate glass, although the refractive index of the glass decreases due to the generation of a filament and the glass appears black (dark) under an optical microscope, layer-like altered area portions are formed at the boundaries of the glass that has been overlaid, and joining can be performed in the same process as in a case in which the refractive index increased.

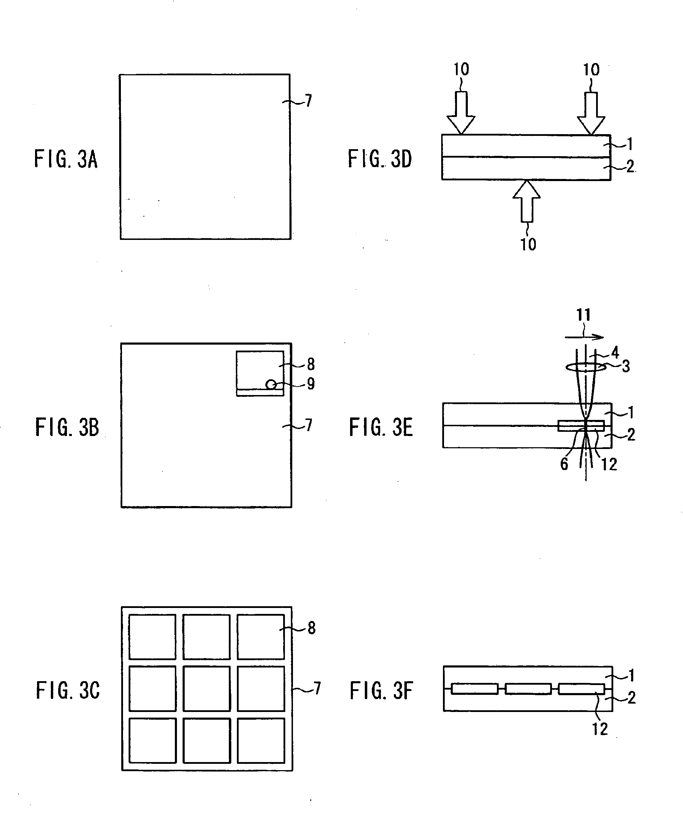

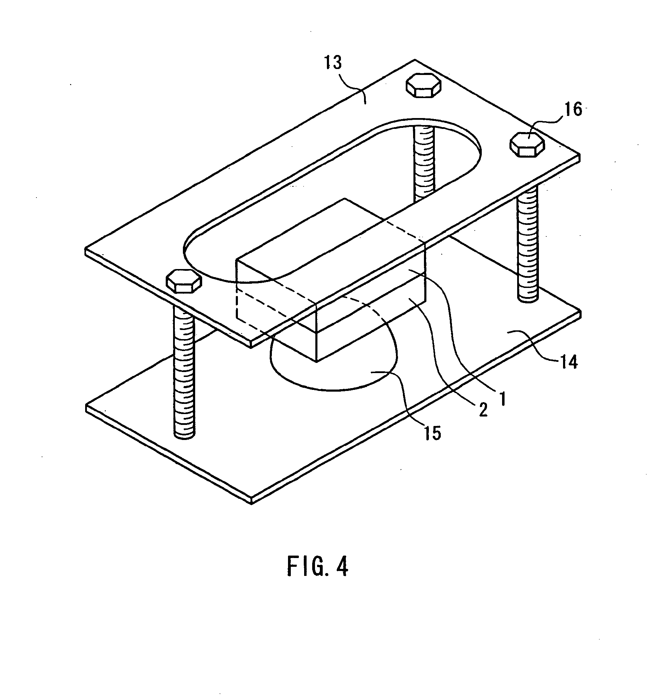

The following describes the specific content of a substance joining method for joining two substances with use of a filament area generated by an ultrashort pulse laser beam, as an embodiment of a first joining method of the present invention, with reference to FIG. 3 and FIG. 4.

Here, FIGS. 3(a), 3(b) and 3(c) are plan views showing illustrations in a joining area formation process, and FIGS. 3(d), 3(e) and 3(f) are illustrations of FIGS. 3(a), 3(b) and 3(c) respectively as viewed from the side.

First, two plates of silica glass that are 7 mm × 20 mm and 0.7 mm thick are prepared as samples, and the two plates of silica glass are stacked together after their surfaces have been cleaned. A joining area 7 for joining the two samples is formed in the center portion of the samples. The joining area 7 is an area shaped as a square having approximately 400 µm sides, and FIG. 3(a) shows the joining area 7 before the joining operation has been performed. As shown in FIG. 3(c), which is a plan view in which the joining area 7 has been formed, nine joining portions 8 shaped as squares having 100 µm sides are formed in the joining area 7 having 20 µm intervals therebetween in the vertical direction and horizontal direction. Specifically as shown in FIG. 3(b), in each joining portion 8, a laser beam 9 is scanned for 100 µm in the horizontal direction in the figure, then the irradiating position is moved 1 µm in the vertical direction in the figure and laser beam irradiating is again performed in the horizontal direction, and this process is performed repeatedly.

In this case, since the laser beam was generated by a titanium sapphire laser system, the central wavelength was 800 nm, the pulse width was 85 fs, and the recurrence frequency was 1 kHz. Also, the numeric aperture (NA) of the laser beam focusing system was 0.3, and the energy was 1.0 µJ/pulse.

In order to cause sufficiently close contact between silica glass that is the first substance 1 composed of a transparent material on the ultrashort pulse laser beam incident side and silica glass that is the second substance 2, compressive force 10 is applied to side portions on the upper side and to a center portion on the lower side as shown in FIG. 3(d), which is a view from the side, and a force of approximately 40 MPa was applied in the joining area 7. Specifically, a fixing jig shown in FIG. 4 was used. In FIG. 4, the samples 1 and 2 are stacked together and further sandwiched between a pair of iron plates shown as an upper side plate 13 and a lower side fixing plate 14, and the compressive force was adjusted with use of fixing screws 16 so as to clamp the stacked samples 1 and 2. A hemispherical projection 15 is provided at a center of the lower side fixed plate 14, and adjustment is performed so that at a portion where the ultrashort pulse laser beam is irradiated, the interval between the two samples is reliably approximately 1/4 the laser beam wavelength.

As shown in FIG. 3(e), which is a side view showing a state in which the ultrashort pulse laser beam is being irradiated, the ultrashort pulse laser beam 4 that was irradiated under the above conditions passes through the focusing lens 3 and thereafter forms the single filament area 6 that is approximately 30 µm long, in the same way as shown in FIG. 1(b). Note that an arrow 11 in FIG. 3(e) indicates the laser beam scan direction.

Localized melting of the silica glass occurs in the filament area generated in this way, then the silica glass re-solidifies, and thus the two substances to be joined are laser-welded. Since the filament area is formed along a predetermined length in the optical axis direction, the two substances to be joined can be melted along a predetermined depth centered around the abutting face of the two substances to be joined without scanning the focal point in the optical axis direction, and therefore the filament area is suited for laser welding.

FIG. 3(f) shows a condition observed after the joining, from the side of the substance 1 composed of a transparent material and the other silica glass that is the substrate 2. As shown in FIG. 3(f), very small modified (altered) areas 12 that appear white are formed only in portions of the two plates of silica glass where the laser beam was scanned, centered around the abutting face. Under the conditions of this case, the depth (length in the laser beam optical axis direction) of the modified (altered) area that appears white was confirmed to be approximately 30 pm, which is equal to the length of the filament region.

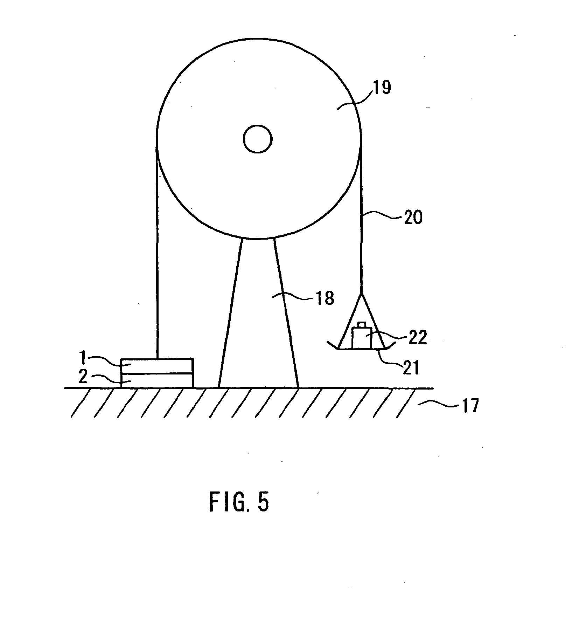

Next, the joint strength of the two plates of silica glass joined in this way was examined. FIG. 5 is a schematic illustration showing a tester used by the inventors to measure the joint strength. As shown in FIG. 5, a brace 18 was stood upright on a base 17, and a pulley block 19 was provided so as to be freely rotatable. Then a wire 20 was adhered to the substance 1 composed of a transparent material that is on the laser beam incidenting side, which is part of the two plates of silica glass that are the substances that have been joined together. A plate 21 was provided on the other end of the wire, a weight 22 was placed on the plate 21, and how much weight before the joined samples split into two was measured. The joint strength was estimated by dividing the value of the weight obtained at this time by the joining surface area.

As a result, the joint strength in the case of joining the two silica plates under the above-described conditions was approximately 15 MPa, and it was confirmed that this is a sufficient strength for practical use. Note that this joint strength is influenced by the degree of close contact between the plates of glass to be joined. Also, the degree of contact between the plates of glass varies according to the size of the plates of glass and the magnitude of force applied when joining the plates of glass. According to the confirmation performed by the inventors, in a case where optimal conditions are obtained, the maximum joint strength was approximately 50 MPa, which is approximately the same as the tensile strength of the plates of glass.

Although a case of joining plates of silica glass together has been described above as a specific description of the substance joining method according to the present embodiment that uses a filament area, the members that can be joined using the joining method according to the present embodiment are not limited to the members described above. One conceivable example is joining plates of borosilicate glass together, as an example of joining plates of glass that are composed of the same type of transparent material like the silica glass plates described above.

Also, the present invention is not limited to joining plates of the same type of glass. Joining plates of different types of glass such as silica glass and borosilicate glass is also possible.

Also, the substance that is transparent to the extent that an ultrashort pulse laser beam irradiated thereon causes a nonlinear absorption phenomenon to occur is not limited to silica glass and borosilicate glass that are given as examples above. For example, another glass material such as nonalkali glass can be used as the first substance composed of a transparent material. Furthermore, a resin such as an acrylic resin that is highly transparent can be used as the first substance composed of a transparent material on the ultrashort pulse laser beam incidenting side. Therefore, for example, plates of acrylic resin can be joined together.

Here, in the substance joining method according to the present embodiment as described above, if the first substance on the ultrashort pulse laser beam incidenting side is composed of a transparent material, controlling the conditions of the ultrashort pulse laser beam that is irradiated enables causing a self-focusing effect to occur and forming a filament area. Then, the formation of the filament area melts at least the first substance, which thereafter re-solidifies, thus joining the two substances together. Accordingly, the joining can be achieved regardless of the material of the second substance that is to be joined with the first substance, as long as a filament area can be formed in the first substance composed of a transparent material on the ultrashort pulse laser beam incident side by causing the ultrashort pulse laser beam to be incident on the first substance.

Specifically, when the first substance composed of a transparent material is a glass such as silica glass or borosilicate glass or a highly transparent resin as in the examples described above or another member, the first substance can be joined with the second substance regardless of whether the second substance that is to be joined with the first substance is the same kind of substance as the first substance or a different substance, and regardless of the whether the second substance is a substance composed of a transparent material.

By performing specific experiments, the inventors confirmed that when the first substance is silica glass, the first substance can be joined with a second substance that is, for example, a resin substrate such as an acrylic resin, a silicon substrate, and a metal plate such as aluminum, copper or stainless steel Also, measurement using the same tester as the tester used to examine the joint strength between the plates of silica glass shown in the above-described FIG. 5 showed that a joint strength of 14.9 to 15.0 MPa was achieved, which is the same as the case of joining plates of silica glass together.

In this way, the reason that the substance joining method according to the present embodiment can join different types of substances that have different thermal expansion coefficients is thought to be because the nonlinear absorption phenomenon caused by the ultrashort pulse laser beam is generated in an extremely narrow area that has a diameter of 1 to 2 µm, and furthermore the melting of the substances to be joined ends in a very short time. In other words, since only a very small portion of the joining area melts and re-sohdifies, thermal expansion in the substances to be joined only occurs very little as an absolute value in the narrow area, and moreover, due to successively cooling and re-solidifying along with the movement of the beam, the difference in the thermal expansion coefficients of the substances to be joined is thought to have almost no influence.

The joining method according to the present embodiment can join glass and metal, which was impossible in normal laser welding etc. due to the differences in their thermal expansion coefficients, and can be expected to be highly applicable in practical use as a laser welding method. Note that given the principle of the joining method according to the present embodiment, in a case of joining different types of substances that have very different thermal expansion coefficients, it is desirable to precisely adjust the repetition frequency and pulse width of the ultrashort pulse laser beam.

Also, as described above, it was confirmed that the joining method according to the present embodiment enables joining glass and a silicon substrate. This shows that using the joining method according to the present embodiment enables manufacturing a semiconductor element having an optical function, as a joined substance obtained by joining a transparent optical element such as a lens and a semiconductor substrate that can operate as a semiconductor element by having a semiconductor area formed in the interior of the substrate by a diffusion process, implantation process or the like and being cut into separate chips. In other words, the joining method according to the present embodiment enables performing so-called wafer-level packaging in which, for example, a package or optical lens element composed of a transparent member such as glass or resin is laminated on a semiconductor wafer having a semiconductor device formed thereon, and directly joined to the semiconductor wafer.

Note that the semiconductor substrate that can be joined using the joining method according to the present embodiment is not limited to the silicon substrate described above. A compound semiconductor substrate such as a GaAs substrate or GaN substrate can also be joined. Also, using a method for manufacturing a semiconductor element using the substance joining method according to the present embodiment enables directly joining a semiconductor element manufactured as a device that has been cut into units of chips, or a wafer substrate in which a semiconductor area has been formed through a semiconductor manufacturing process, and a transparent member such as a package or a lens that is composed of glass, a transparent resin or the like. As a result, it is possible to provide a practical manufacturing method that is applicable to a wide range of products, as a method for manufacturing a semiconductor element that has an optical function such as, in particular, a CCD, a laser, and a light emitting diode (LED).

Furthermore, it was confirmed that the substance joining method according to the present embodiment can join a transparent member such as silica glass and a metal plate or an alloy plate. Examples of the metal plate include a metal plate composed of mainly a single metal such as stainless steel, iron, steel, aluminum, or copper, and examples of the alloy plate include an alloy plate that includes at least any of the above metals.

Also, since substances are joined by the melting of very small surface areas as described above, it is also possible to form a single grain of silicon and glass by, for example, matching the crystal orientations of the glass and silicon, joining the two with use of the present invention while maintaining this condition, and then performing a predetermined anneal process thereon. A case of realizing a method for forming such a crystal shows the possibility of obtaining a revolutionary result of the ability to create a crystal by a method other than epitaxial growth.

Furthermore, by appropriately generating a filament area with use of the substance joining method according to the present embodiment as described above, it is possible to, for example, suppress a reduction in the transmissivity of glass that occurs when joining glass plates, to approximately 10%. It is therefore possible to manufacture an optical element that is a joined body obtained by joining, while suppressing the attenuation of light that is transmitted, members that are optical elements composed of a transparent material when viewed individually, such as a light guiding plate, an optical lens and a prism. Accordingly, using the substance joining method according to the present invention can be expected to obtain a significant result in a case of manufacturing an optical element such as a compound material composed of a prism and a lens, in which it is difficult to form a single optical member due to limitations on shape and the required optical properties, and furthermore for which a high transmissivity is required as an overall optical property.

### Embodiment 2

The following describes Embodiment 2 of a substance joining method of the present invention.

The point of the first substance joining method of the present invention is that a filament area is generated by adjusting the focusing conditions of an ultrashort pulse laser beam as shown in the above-described Embodiment 1. In Embodiment 2, by taking advantage of the feature of the filament area in the first substance joining method of the present invention, which is that the filament area is formed along a predetermined length in the laser beam optical axis direction, a laser beam is caused to incident at a tilt with respect to an abutting portion that is a joining face of substances to be joined.

As described above, in conventional welding using an ultrashort pulse laser beam, it is necessary to accurately match the abutting portion of the substances to be joined and the focal point of the laser beam, and therefore it is necessary to accurately keep a distance between the substances to be joined and the focusing optical system of the laser beam. For this reason, shifts in the position of the laser beam focal point clearly readily occur, and causing the laser beam to incident at a tilt with respect to the joining face is very difficult and therefore it should be said to be rather impossible in practical use. However, since the filament area is formed along a predetermined length in the laser beam optical axis direction as described above, which is a characteristic feature of the first substance joining method of the present invention, there is a certain margin in the distance between the focusing optical system of the laser beam and the joining face that is the abutting face of the substances to be joined, and therefore there is a practical advantage in that the laser beam can be caused to be incident at a tilt.

Regarding the direction of a predetermined angle of tilt with respect to the joining face at which the ultrashort pulse laser beam is caused to be incident, firstly it is possible to cause the tilt direction to be the same direction as the scan direction of the beam, or the opposite direction.

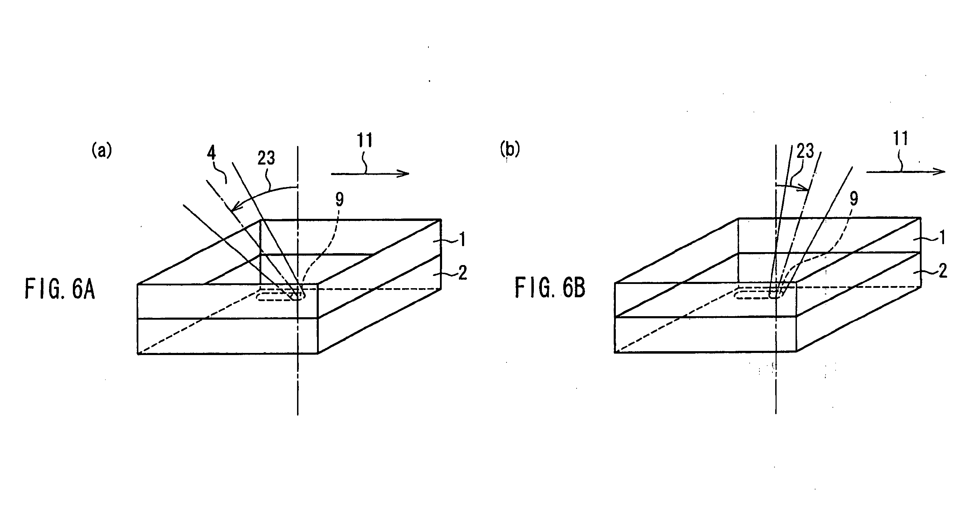

FIG. 6(a) is an illustration showing, in a case of joining a first substance 1 and a second substance 2 that are composed of a transparent material, a condition in which a tilt direction 23 of the ultrashort pulse laser beam 4 being scanned is a direction opposite of a beam scan direction 11, that is to say, backwards in the traveling direction of the laser beam. As a result, the irradiating system of the beam does not come directly above the irradiating point, thereby enabling reliably observing of the position and status of the irradiating point from directly above. Also, in a case where the second substance 2 on the side opposite from the first substance composed of a transparent material reflects the laser beam, particularly a case such as joining glass and metal, it is possible to prevent the beam that reflected off the joining face from retracing the beam path during irradiation and negatively effecting the focusing lens, laser generating device and the like.

Regarding another direction in which the ultrashort pulse laser beam is tilted, it is also possible to tilt the ultrashort pulse laser beam in a direction substantially perpendicular to the beam scan direction when irradiating the beam.

FIG. 6(b) is an illustration showing this condition in which the tilt direction 23 of the beam being scanned is a direction perpendicular to the beam scan direction 11, that is to say, a direction that faces from the background of the paper to the foreground. There are cases in which, for example, the shapes of the substances to be joined are complex, and depending on the location, there are variations in the vertically upward thickness of the joining face of the first substances that is composed of a transparent material, which is the substance that is disposed on the side on which the ultrashort pulse laser beam is incident, and in which the laser beam is blocked or scattered in the vertically upward direction of the joining face. The tilting described above enables avoiding such situations when performing joining.

Note that the substance joining method according to the present embodiment differs from the substance joining method according to the above-described Embodiment 1 only with respect to the incident direction of the ultrashort pulse laser beam. Therefore, similarly to the above-described Embodiment 1, the various members described in Embodiment 1 can be joined with use of the substance joining method according to the present embodiment as well. Needless to say, similarly to Embodiment 1, the substance joining method according to Embodiment 2 also can be used as a manufacturing method for packaged semiconductor elements and a manufacturing method for a joined optical member.

### Embodiment 3

The present embodiment describes the joining of a substance composed of a transparent material such as glass and a substance that reflects an ultrashort pulse laser beam such as metal by causing a nonlinear absorption phenomenon to occur with use of the ultrashort pulse laser beam.

Embodiment 1 and Embodiment 2 according to the substance joining method of the above-described present invention describe the joining of various types of substances by generating a filament area with use of the ultrashort pulse laser beam. It was also described that these joining methods are superior for practical use since the filament area is generated along a predetermined length in the laser beam optical axis direction, thereby solving the problem, in conventional ultrashort pulse laser beam welding, of difficulty in monitoring whether the focal point of the laser beam is being properly formed on the abutting face of the substances to be joined.

According to the joining method described in Embodiment 1, it is necessary for the first substance that is disposed on the side on which the ultrashort pulse laser beam incidents to be a substance composed of a transparent material in order for the self-focusing effect of the laser beam to occur, but the second substance that is to be joined to the first substance can be a member that reflects the laser beam such as a metal. Also, if the spot diameter of the laser beam in the joining area is sufficiently narrowed down, it is possible to join substances such as glass and metal, which were conventionally thought to be impossible to join by a laser beam due to having thermal expansion coefficient numerical values that are mutually substantially different.

In this way, in a case where the second substance is a member that reflects the ultrashort pulse laser beam such as a metal, there is the advantage of being able easily to monitor the condition of the laser beam on the joining face, and even if a filament area is not necessarily generated in this case, the laser beam diameter is easily monitored and adjustment can be performed. In other words, using a substance that reflects the ultrashort pulse laser beam as the second substance enables obtaining a sufficiently practical joining method that resolves the problems of the conventional joining method. Here, it is possible to monitor the laser beam focal point by a method using a camera that uses an imaging element such as a commonly-used CCD, or a method of measuring a maximum value of a laser beam reflection brightness caused by the formation of the focal point

Note that in a case where the second substance, which is disposed on the side different from the side on which the laser beam is incident, is a substance that reflects the laser beam as in the present embodiment, it is preferable to employ a method in which the laser beam is irradiated from a tilted direction with respect to the joining face of the substances to be joined, similarly to as described in Embodiment 2. In this way, irradiating the laser beam from a tilted direction with respect to the joining face of the substances to be joined enables preventing negative influence on the laser beam irradiating system mechanism due to the reflected laser beam returning to the beam generating system.

Also, in a case of not tilting the laser beam with respect to the joining face when performing irradiating, and in a case where the tilt direction of the laser beam is a direction that is opposite of the beam scan direction as shown in FIG. 6(a), it can be expected that the beam that reflected off the joining face of the second substance will generate a photo absorption phenomenon induced by a certain degree of a multiphoton absorption phenomenon and field ionization in the vicinity of the joining portion of the first substance composed of a transparent material. For this reason, in such cases, it appears to be more preferable to reduce the energy of the irradiated laser beam, compared to a case in which the laser beam is not reflected off the joining face, as in the case in which the second substance is a substance composed of a transparent material.

In the experiments performed by the inventors, in a case of causing the laser beam to incident from a perpendicular direction with respect to the joining face, that is to say, in a case where the laser beam irradiated from the exterior and the reflected laser beam from the joining face incident on the first substance composed of a transparent material at the same time, it is appropriate for the amount of energy of irradiation to be substantially 60 to 70% of a case of performing joining to a second substance that does not reflect the laser beam such as silica glass.

The above is a specific description of embodiments of a substance joining method according to the present invention and a joined body manufacturing method according to the present invention using the joining method. The embodiments of the above-described joining method of the present invention describe exemplary cases in which, as shown in FIGS. 3(b) and 3(c), the method of forming the joining areas of the two substances is a method of forming square joining portions separated by a predetermined interval in an island configuration. However, the method of forming the joining areas in the substance joining method according to the present invention is not limited to this. For example, the joining areas may be formed by forming a plurality of linear joining portions with a predetermined interval therebetween, which are formed by scanning a laser beam a predetermined distance.

Also, even in a case of forming a plurality of linear joining portions in this way, in the same way as a case of providing a plurality of joining portions in an island configuration as described above, the area in which melting occurs at a certain moment is limited to a very small area in which the laser beam actually is irradiated, and therefore there is no change in the effect of being able to join substances whose thermal expansion coefficients are significantly different, such as glass and metal. However, if the scanning speed of the laser beam is too fast, the length of the portion that is melted by the laser beam increases, there is a danger of cracks forming in the substances to be joined due to the difference in the thermal expansion coefficients in the subsequent cooling and re-solidifying. For this reason, in a case of forming welding areas by linear welding portions, it is necessary to pay sufficient attention to the scanning speed of the laser beam as well as the beam pulse width and repetition frequency as described above.

### Embodiment 4

The following describes a substance joining device according to the present invention as Embodiment 4.

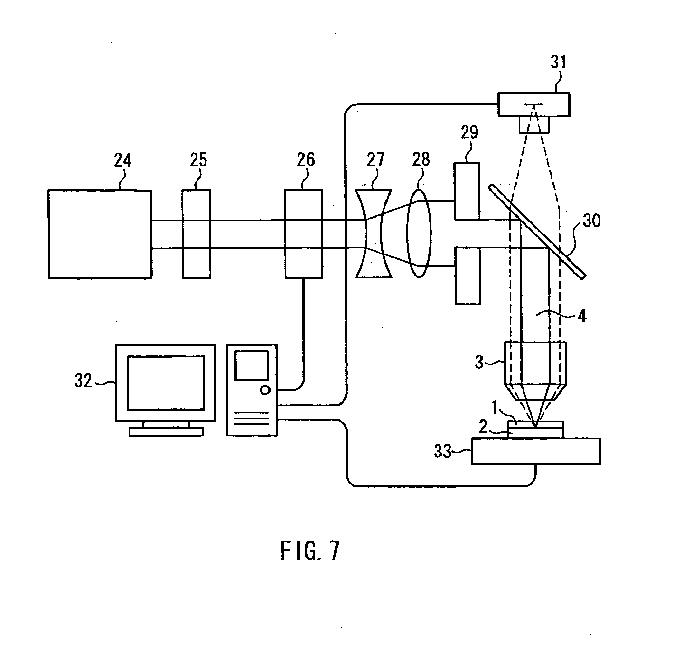

FIG. 7 is a schematic structural diagram showing a main structure of the substance joining device according to the present embodiment

As shown in FIG. 7, in the substance joining device according to the present embodiment, the first substance 1 composed of a transparent material and the second substance 2 have been placed on an XY stage 33 that can be moved a predetermined amount in an arbitrary direction at a predetermined speed. The first substance 1 and second substance 2 have been put into close contact with each other under a predetermined applied-pressure condition by, for example, a fixing jig (omitted from FIG. 7) that holds two substances to be joined in close contact, which is described using FIG. 4 in Embodiment 1.

The ultrashort pulse laser beam 4 that has been emitted from a titanium sapphire amplified laser device 24 passes through an optical system including an ND filter 25, a shutter 26, a concave lens 27, a convex lens 28 and the like, and is restricted in external form by an aperture 29. The ultrashort pulse laser beam 4 then is reflected off a mirror 30, given a predetermined focusing power by the focusing lens 3, and is incident on a joining area. The irradiating condition of the ultrashort pulse laserbeam 4 is checked by a monitoring camera 31 that includes an imaging element such as a CCD, and based on such information, a control device 32 controls the overall device by adjusting the shutter 26 and XY stage 33.

A detailed description of the actual irradiating condition and irradiating angle of the ultrashort pulse laser beam, the laser beam scan direction, types of substances to be joined, etc. in the substance joining device of the present embodiment has been omitted here due to being the same as in Embodiments 1 to 3 that are described as the substance joining method of the present invention.

For example, in FIG. 7, the ultrashort pulse laser beam 4 is irradiated on the first substance 1 and second substance 2 that are to be joined, from a vertically upwards direction of the joining face. However, in the case of tilting the irradiating direction of the ultrashort pulse laser beam with respect to the joining face as in Embodiment 2 of the present invention, it is preferable to tilt the optical axis of the ultrashort pulse laser beam relative to the substances to be joined by tilting the fixing jig, which is not shown, that is holding the substances 1 and 2 that are to be joined in close contact. In tilting the path of the laser beam that is irradiated on the substances to be joined by adjusting the irradiating mechanism of the ultrashort pulse laser beam, making the adjustment is difficult, and therefore when the substances to be joined are small, tilting the substances to be joined enables simplifying the structure of the substance joining device.

Also, even in the case of a substance joining device used in a case of joining a second substance that reflects the ultrashort pulse laser beam, as in Embodiment 3 of the substance joining method of the present invention, the irradiating mechanism of the ultrashort pulse laser beam, the XY stage that moves the substances to be joined, and the like of the substance joining device are no different than in the substance joining device used in a case of performing the joining methods shown in the above-described Embodiments 1 and 2.

However, as a substance joining device employed in a case of using a member that reflects the ultrashort pulse laser beam as the second substance, the present embodiment is different in that it is not necessary to control the ultrashort pulse laser beam irradiating condition to the condition under which the filament area is formed.

### Industrial Applicability

As is clear in the above description, a joining method of the present invention enable joining members that are composed of the same type or different type of transparent material such as glass, as well as joining a member composed of a transparent material and, for example, a resin substrate, silicon substrate, metal plate, semiconductor substrate, etc. that are different in type. The joining method of the present invention therefore can be expected to be applicable in a wide range of fields, with a central focus on optical fields.

## Claims

1. A method for joining two substances (1, 2) by causing a nonlinear optical phenomenon to occur with use of an ultrashort pulse laser beam (4),
wherein of the two substances, a first substance (1) that is positioned on a side on which the ultrashort pulse laser beam (4) is incident is composed of a transparent material, and the two substances (1, 2) are joined by generating the ultrashort pulse laser beam (4) **characterized by** generating the ultrashort pulse laser beam with use of a self-focusing effect of the ultrashort pulse laser beam (4) in the first substance (1), a filament area (6), and allowing the filament area (6) in the first substance to reach at least a joining face of the two substances (1, 2).

2. The method for joining substances of claim 1, wherein the first substance is a glass or a transparent resin.

3. The method for joining substances of claim 1 or 2,
wherein among the two substances, a second substance that is positioned on a side different from the side on which the ultrashort pulse laser beam is incident is composed of the same type of transparent material as the first substance.

4. The method for joining substances of claim 1 or 2,
wherein among the two substances, a second substance that is positioned on a side different from the side on which the ultrashort pulse laser beam is incident is a different type of substance from the first substance.

5. The method for joining substances of claim 4, wherein the second substance is any of a glass, a metal, silicon, a compound of a metal or silicon, a semiconductor or a semiconductor compound, and a resin.

6. The method for joining substances of claim 5, wherein the metal is any of stainless steel, iron, steel, aluminum, copper, and an alloy including at least one of these.

7. The method for joining substances of any one of claims 1 to 6, wherein the ultrashort pulse laser beam is incident in a condition of being tilted at a predetermined angle (23) with respect to the joining face of the two substances.

8. The method for joining substances of any one of claims 1 to 7, wherein the two substances are joined by a plurality of island-like joining portions (8) that have been formed with a predetermined interval therebetween.

9. The method for joining substances of any one of claims 1 to 7, wherein the two substances are joined by a plurality of linear joining portions (12) having a predetermined length, which have been formed with a predetermined interval therebetween.

10. The method of claim 1, wherein of the two substances, a second substance (2) that is positioned on a side different from the side on which the ultrashort pulse laser beam (4) is incident is a metal or a substance that reflects the ultrashort pulse laser beam to the same extent as or greater extent than a metal, and the ultrashort pulse laser beam that is irradiated enables causing a self-focusing effect to occur and forming a filament area generated in the first substance (1) allowed to reach at least a joining face of the two substances (1,2).

11. The method for joining substances of claim 10, wherein the ultrashort pulse laser beam (4) is incident in a condition of being tilted at a predetermined angle (23) with respect to the joining face of the two substances (1, 2).

## Patentansprüche

1. Verfahren zum Verbinden zweier Substanzen (1, 2) durch Bewirken eines nichtlinearen optischen Phänomens mittels eines Ultrakurzpulslaserstrahls (4),
wobei von den beiden Substanzen eine erste Substanz (1), die an einer Seite angeordnet ist, auf der der Ultrakurzpulslaserstrahl (4) auftrifft, aus einem transparenten Material besteht und die beiden Substanzen (1, 2) durch Erzeugen des Ultrakurzpulslaserstrahls (4) verbunden werden, **dadurch gekennzeichnet, dass** der Ultrakurzpulslaserstrahl (4) durch Verwenden eines selbstfokussierenden Effekts in der ersten Substanz (1) einen Filamentbereich (6) erzeugt, und dass ermöglicht wird, dass der Filamentbereich (6) in der ersten Substanz wenigstens eine Verbindungsfläche der beiden Substanzen (1, 2) erreicht.

2. Verfahren zum Verbinden von Substanzen nach Anspruch 1, wobei die erste Substanz ein Glas oder ein transparentes Harz ist.

3. Verfahren zum Verbinden von Substanzen nach Anspruch 1 oder 2, wobei von den beiden Substanzen eine zweite Substanz, die auf einer anderen Seite angeordnet ist als die, auf der der Ultrakurzpulslaserstrahl auftrifft, aus der gleichen transparenten Materialart besteht wie die erste Substanz.

4. Verfahren zum Verbinden von Substanzen nach Anspruch 1 oder 2, wobei von den beiden Substanzen eine zweite Substanz, die auf einer anderen Seite angeordnet ist als die, auf der der Ultrakurzpulslaserstrahl auftrifft, eine andere Substanzart ist als die erste Substanz.

5. Verfahren zum Verbinden von Substanzen nach Anspruch 4, wobei die zweite Substanz aus einem Glas, einem Metall, Silizium, einer Metall- oder Siliziumverbindung , einem Halbleiter oder einer Halbleiterverbindung oder aus einem Harz besteht.

6. Verfahren zum Verbinden von Substanzen nach Anspruch 5, wobei das Metall Edelstahl, Eisen, Stahl, Aluminium, Kupfer oder eine Legierung ist, die wenigstens eines davon umfasst.

7. Verfahren zum Verbinden von Substanzen nach einem der Ansprüche 1 bis 6, wobei der Ultrakurzpulslaserstrahl so angeordnet ist, dass er in einem vorgegebenen Winkel (23) bezogen auf die Verbindungsfläche der beiden Substanzen geneigt auftrifft.

8. Verfahren zum Verbinden von Substanzen nach einem der Ansprüche 1 bis 7, wobei die beiden Substanzen durch mehrere inselartige Verbindungsabschnitte (8) verbunden sind, die mit einem vorgegebenen Abstand dazwischen ausgebildet sind.

9. Verfahren zum Verbinden von Substanzen nach einem der Ansprüche 1 bis 7, wobei die beiden Substanzen durch mehrere, mit einem vorgegebenen Abstand dazwischen ausgebildete lineare Verbindungsabschnitte (12) mit einer vorgegebenen Länge verbunden sind.

10. Verfahren nach Anspruch 1, wobei von den beiden Substanzen eine zweite Substanz (2), die an einer anderen Seite angeordnet ist als die, auf der der Ultrakurzpulslaserstrahl (4) auftrifft, aus einem Metall besteht oder aus einer Substanz, die den Ultrakurzpulslaserstrahl in dem gleichen Maß wie ein Metall oder in einem höheren Maß reflektiert, und wobei der Ultrakurzpulslaserstrahl, der eingestrahlt wird, das Auftreten eines selbstfokussierenden Effekts sowie das Ausbilden eines Filamentbereichs in der ersten Substanz (1), der wenigstens eine Verbindungsfläche der beiden Substanzen (1, 2) erreichen kann, bewirkt.

11. Verfahren zum Verbinden von Substanzen nach Anspruch 10, wobei der Ultrakurzpulslaserstrahl (4) so angeordnet ist, dass er in einem vorgegebenen Winkel (23) bezogen auf die Verbindungsfläche der beiden Substanzen (1, 2) geneigt auftrifft.

## Revendications

1. Procédé pour assembler deux substances (1, 2) en amenant un phénomène optique linéaire à se produire avec utilisation d'un faisceau laser à impulsion ultracourte (4),
dans lequel sur les deux substances, une première substance (1) qui est positionnée sur un côté sur lequel le faisceau laser à impulsion ultracourte (4) est incident, est composée d'une matière transparente, et les deux substances (1, 2) sont assemblées en générant le faisceau laser à impulsion ultracourte (4), **caractérisé par** la génération du faisceau laser à impulsion ultracourte avec utilisation d'un effet d'autofocalisation du faisceau laser à impulsion ultracourte (4) dans la première substance (1), dans une zone à filament (6), et par le fait de laisser la zone à filament (6) dans la première substance atteindre au moins une face d'assemblage des deux substances (1, 2).

2. Procédé d'assemblage de substances selon la revendication 1, dans lequel la première substance est un verre ou une résine transparente.

3. Procédé d'assemblage de substances selon la revendication 1 ou 2, dans lequel parmi les deux substances, une seconde substance qui est positionnée sur un côté différent du côté sur lequel le faisceau laser à impulsion ultracourte est incident, est composée du même type de matière transparente que la première substance.

4. Procédé d'assemblage de substances selon la revendication 1 ou 2, dans lequel parmi les deux substances, une seconde substance qui est positionnée sur un côté différent du côté sur lequel le faisceau laser à impulsion ultracourte est incident, est un type de substance différent de la première substance.

5. Procédé d'assemblage de substances selon la revendication 4, dans lequel la seconde substance est l'un quelconque parmi un verre, un métal, du silicium, un composé d'un métal ou de silicium, un semi-conducteur ou un composé de semi-conducteur, et une résine.

6. Procédé d'assemblage de substances selon la revendication 5, dans lequel le métal est l'un quelconque parmi un acier inoxydable, du fer, un acier, de l'aluminium, du cuivre et un alliage incluant au moins l'un de ceux-ci.

7. Procédé d'assemblage de substances selon l'une quelconque des revendications 1 à 6, dans lequel le faisceau laser à impulsion ultracourte est incident dans une condition où il est incliné à un angle prédéterminé (23) par rapport à la face d'assemblage des deux substances.

8. Procédé d'assemblage de substances selon l'une quelconque des revendications 1 à 7, dans lequel les deux substances sont assemblées par une pluralité de portions d'assemblage analogues à des îlots (8) qui ont été formées avec un intervalle prédéterminé entre celles-ci.

9. Procédé d'assemblage de substances selon l'une quelconque des revendications 1 à 7, dans lequel les deux substances sont assemblées par une pluralité de portions d'assemblage linéaires (12) ayant une longueur prédéterminée, qui ont été formées avec un intervalle prédéterminé entre celles-ci.

10. Procédé selon la revendication 1, dans lequel sur les deux substances, une seconde substance (2) qui est positionnée sur un côté différent du côté sur lequel le faisceau laser à impulsion ultracourte (4) est incident, est un métal ou une substance qui réfléchit le faisceau laser à impulsion ultracourte dans la même mesure ou dans une plus grande mesure qu'un métal, et le faisceau laser à impulsion ultracourte qui est émis permet d'amener un effet d'autofocalisation à se produire et de former une zone à filament générée dans la première substance (1) qui peut atteindre au moins une face d'assemblage des deux substances (1, 2).

11. Procédé d'assemblage de substances selon la revendication 10, dans lequel le faisceau laser à impulsion ultracourte (4) est incident dans une condition où il est incliné à un angle prédéterminé (23) par rapport à la face d'assemblage des deux substances (1, 2).
